Europäisches Patentamt

European Patent Office

Office européen des brevets

(11) Numéro de publication: **0 238 383 B1**

(12) **FASCICULE DE BREVET EUROPEEN**

(19)

(45) Date de publication du fascicule du brevet:
09.08.89

(21) Numéro de dépôt: **87400414.6**

(22) Date de dépôt: **24.02.87**

(51) Int. Cl.⁴: **H01M 2/10, B60R 16/04**

(54) Enceinte d'isolation thermique pour batterie de véhicule.

(30) Priorité: **18.03.86  FR 8603815**

(43) Date de publication de la demande:
**23.09.87 Bulletin 87/39**

(45) Mention de la délivrance du brevet:
**09.08.89 Bulletin 89/32**

(84) Etats contractants désignés:
**DE GB IT**

(56) Documents cités:
**CH-A- 289 570**
**DE-A- 3 316 512**
**FR-A- 1 559 865**
**FR-A- 2 486 311**
**US-A- 4 126 734**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Froumajou, Armand, 11 Bis, rue Docteur
Laennec, F-95520 Osny(FR)**

(74) Mandataire: **Bressand, Georges et al, c/o CABINET
LAVOIX 2 Place d'Estienne d'Orves, F-75441 Paris
Cedex 09(FR)**

ACTORUM AG

## Description

La présente invention a pour objet une enceinte d'isolation thermique pour batterie de véhicule automobile.

On sait que dans les véhicules automobiles, il est très souvent impossible d'implanter la batterie ailleurs que dans le compartiment moteur. Or, celui-ci se trouve soumis dans certaines circonstances, à des températures préjudiciables au bon fonctionnement et à la longévité de la batterie.

Pour assurer une isolation thermique de la batterie, il est connu d'utiliser des pare-chaleur ou des écrans locaux, ou encore un compartiment à accumulateur, constituant une sorte de conteneur rigide de manipulation plus spécialement destiné aux véhicules électriques, et servant surtout à regrouper pour la manipulation un ensemble de batteries.

Les pare-chaleur et écrans n'assurent qu'une isolation insuffisante, tandis que la dernière solution ci-dessus est lourde et coûteuse, et ne résoud pas le problème de l'accès au remplissage des éléments et/ou de l'inspection des témoins de charge. De plus, il faut fixer chaque batterie au conteneur, puis le conteneur au véhicule.

L'invention a donc pour but de proposer une enceinte d'isolation thermique pour batterie de véhicule, peu onéreuse, d'encombrement réduit et d'une manière générale ne présentant pas les inconvénients ci-dessus.

Suivant l'invention, l'enceinte d'isolation thermique comprend une cuve en matériau mince relativement souple moulée d'une seule pièce, dans laquelle la batterie peut être emboîtée, et qui est agencée de façon à délimiter au moins autour des faces verticales de la batterie, des lames d'air communiquant entre elles, et des moyens sont prévus à la partie supérieure de l'enceinte pour isoler de manière étanche ces lames d'air par rapport à l'extérieur.

Selon un mode de réalisation de l'invention, le fond de l'enceinte est muni d'éléments de support de la batterie délimitant sous celle-ci une lame d'air communiquant avec le pourtour de la batterie, par exemple des plots constitués par des déformés.

L'invention prévoit également d'autres particularités avantageuses, notamment les suivantes :
- les moyens d'isolation étanche des lames d'air verticales sont constitués par une lèvre souple formant le bord supérieur de l'enceinte et appliquée sur le pourtour de la batterie, ou par un joint rapporté au bord supérieur de l'enceinte;
- l'enceinte est munie de moyens de serrage et de maintien de la batterie, par exemple des bossages latéraux dirigés vers l'intérieur, susceptibles de se déformer lors de la mise en place de la batterie et qui viennent s'emboîter dans des évidements latéraux complémentaires, ménagés dans les parois de la batterie.

D'autres particularités et avantages de l'invention apparaîtront au cours de la description qui va suivre, faite en reference aux dessins annexés qui en illustrent deux modes de réalisation à titre d'exemples non limitatifs :

- la Figure 1 est une vue de dessus en plan d'une première forme de réalisation de l'enceinte d'isolation thermique selon l'invention et de la batterie logée dans celle-ci;
- la Figure 2 est une vue en coupe transversale suivant II-II de la Figure 1;
- la Figure 3 est une vue en coupe transversale suivant III-III de la Figure 1;
- la Figure 4 est une vue en coupe longitudinale suivant IV-IV de la Figure 1;
- les Figures 5 et 6 sont des vues partielles respectivement en élévation et en mi-coupe transversale, mi-élévation de deux autres de formes de réalisation.

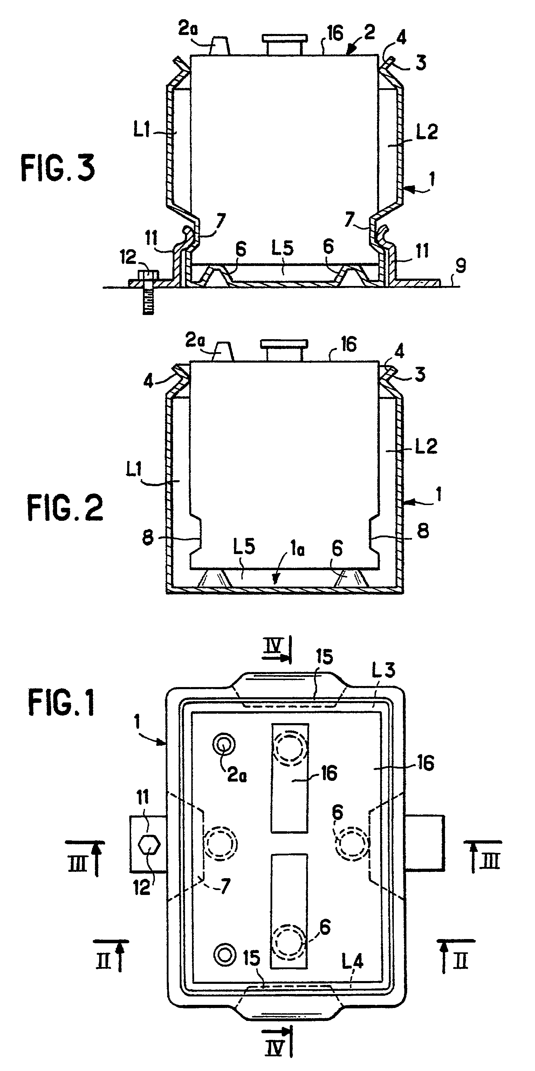

L'enceinte 1 illustrée aux Figures 1 à 4 est destinée à assurer l'isolation thermique d'une batterie 2 d'un véhicule automobile. Cette enceinte 1 est constituée par une cuve en matériau plastique mince relativement souple, par exemple en polypropylène, moulée d'une seule pièce, dans laquelle la batterie 2 peut être emboîtée. La cuve 1 est agencée de façon à délimiter, au moins autour des faces verticales de la batterie 2, des lames d'air L1, L2, L3, L4 communiquant entre elles, et des moyens sont prévus à la partie supérieure de la cuve 1 pour isoler de manière étanche ces lames d'air par rapport à l'extérieur.

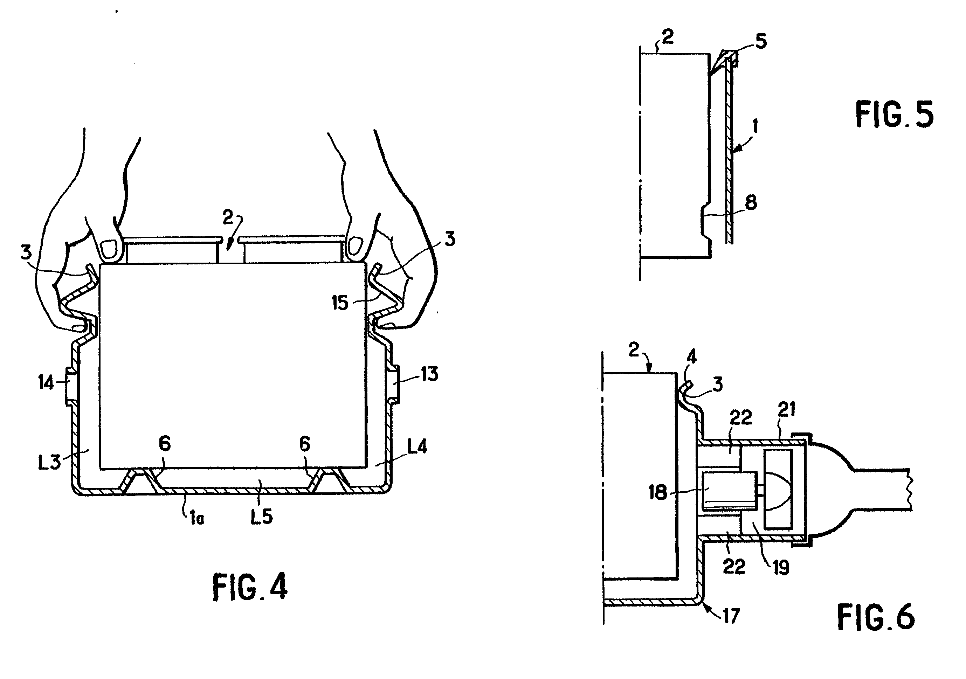

Dans l'exemple des Figures 1 à 4, ces moyens d'isolation étanche des lames d'air L1,...L4 sont constitués par une lèvre souple 3 formant le bord supérieur de l'enceinte 1 et appliquée sur le pourtour de la batterie 2. La lèvre souple 3 présente avantageusement un chanfrein 4 facilitant l'emboîtement de la batterie 2 dans la cuve 1. En variante (Figure 5), la lèvre 3 est remplacée par un joint 5 rapporté au bord supérieur de l'enceinte 1.

Le fond 1a de l'enceinte 1 est muni d'éléments de support de la batterie 2 délimitant sous celle-ci une lame d'air L5 communiquant avec le pourtour de la batterie 2, ces éléments de support étant constitués dans l'exemple représenté par des plots 6 obtenus par des déformés.

Par ailleurs, l'enceinte 1 est munie de moyens de serrage et de maintien de la batterie 2, à savoir dans l'exemple décrit des bossages latéraux 7 dirigés vers l'intérieur de l'enceinte 1 (Figure 3) et qui sont susceptibles de se déformer lors de la mise en place de la batterie 2, en venant s'emboîter dans des évidements latéraux complémentaires 8 ménagés dans les parois en regard de la batterie 2. Cette dernière ainsi que l'enceinte 1 reposent sur une plaque de support 9 sur laquelle elles sont maintenues par des pattes 11 fixées au support 9 par des vis 12, les parties supérieures incurvées des pattes 11 venant s'appliquer dans les bossages 7. D'autre part, une particularité de l'invention prévoit qu'au moins un orifice d'entrée d'air 13 et au moins un orifice de sortie d'air 14 sont agencés dans les parois de l'enceinte 1 pour assurer la ventilation de celle-ci. Ces orifices peuvent en variante, être ménagés sur le fond 1a de la cuve 1, ou encore un orifice peut être formé dans une paroi et l'autre orifice est percé dans le fond 1a.

Des dégagements latéraux 15 saillant extérieurement sont aménagés dans la partie supérieure de la cuve pour faciliter sa manipulation. On notera qu'une fois la batterie 2 insérée dans son enceinte 1, il n'est pas nécessaire de l'extraire de celle-ci, de sorte qu'elle peut être manipulée globalement avec ladite enceinte 1. La face supérieure 16 de la batterie 2 reste visible et normalement accessible, de même que les connexions aux bornes 2a. L'entrée d'air 13 est de préférence reliée à une zone de pression (par exemple la face avant du véhicule) de façon à créer une ventilation dynamique. Par ailleurs, le matelas d'air crée une isolation d'air importante pour les surchauffes momentanées.

Lors de la mise en place de la batterie 2 dans la cuve 1, la paroi de celle-ci se déforme loca lement au droit des bossages 7 qui sont, en position de fixation, pris en sandwich entre la batterie 2 et les pattes 11 (Figure 3).

L'enceinte 1 est peu onéreuse, présente un encombrement réduit, et ne remet en cause ni l'implantation, ni les fixations de la batterie 2.

Dans la forme d'exécution représentée à la Figure 6, l'enceinte 17 est équipée d'un organe de ventilation 18, constitué par exemple par un moto-ventilateur électrique, disposé dans un logement 19 délimité par une extension latérale tubulaire 21 de la paroi de la cuve 17, faisant saillie de cette dernière. Le moto-ventilateur 18 est convenablement centré dans le logement 19 par insertion entre des coussins 22.

L'enceinte 1 selon l'invention peut faire partie d'un circuit de ventilation générale du moteur, permettant de protéger des organes sensibles à la chaleur : injecteurs d'essence, boîtiers électroniques, ou d'évacuer des calories des zones à fort dégagement thermique (turbo-compresseurs, tubulures d'échappement). En particulier au lieu d'être directement monté sur l'enceinte comme dans l'exemple de la Figure 6, le moto-ventilateur peut être inséré dans le circuit de ventilation.

L'ensemble enceinte 1-batterie 2 peut également être inséré dans le circuit de ventilation entre la prise d'air frais et l'éjection sur les organes à refroidir.

La mise en marche de la ventilation peut être commandée, soit par un thermo-contact assurant la mise en marche du moto-ventilateur de refroidissement principal du moteur (radiateur à eau), soit par une sonde de température autonome placée sous le capot du véhicule.

## Revendications

1 - Enceinte d'isolation thermique pour batterie (2) de véhicule agencée de façon à délimiter, au moins autour des faces verticales de la batterie (2) des lames d'air (L1, L2, L3, L4) communiquant entre elles, caractérisée en ce qu'elle comprend une cuve (1, 17) en matériau relativement souple moulée d'une seule pièce, dans laquelle la batterie (2) peut être emboîtée avec déformation de parties latérales (3, 7) de la cuve, et en ce que des moyens souples (3, 5) s'appliquant sur le pourtour de la batterie (2) sont prévus à la partie supérieure de l'enceinte pour isoler de manière étanche ces lames d'air par rapport à l'extérieur.

2 - Enceinte selon la revendication 1, caractérisée en ce que son fond (1a) est muni d'éléments de support de la batterie (2) délimitant sous celle-ci une lame d'air (L5) communiquant avec le pourtour de la batterie, par exemple des plots (6) constitués par des déformés.

3 - Enceinte selon l'une des revendications 1 et 2, caractérisée en ce que les moyens d'isolation étanche des lames d'air verticales sont constitués par une lèvre (3) formant le bord supérieur de l'enceinte (1) ou par un joint (5) rapporté au bord supérieur de l'enceinte.

4 - Enceinte selon l'une des revendications 1 à 3, caractérisée en ce qu'elle est munie de moyens de serrage et de maintien de la batterie, par exemple des bossages latéraux (7) dirigés vers l'intérieur, susceptibles de se déformer lors de la mise en place de la batterie (2) et qui viennent s'emboîter dans des évidements latéraux complémentaires (8) ménagés dans les parois de la batterie (2).

5 - Enceinte selon l'une des revendications 1 à 4, caractérisée en ce qu'au moins un orifice d'entrée d'air (13) et au moins un orifice de sortie d'air (14) pour la ventilation de l'enceinte (1) sont agencés dans au moins une des parois et/ou le fond (1a) de celle-ci.

6 - Enceinte selon l'une des revendications 1 à 5, caractérisée en ce que des dégagements (15) sont ménagés dans sa partie supérieure pour faciliter la manipulation de ladite enceinte (1).

7 - Enceinte selon l'une des revendications 1 à 6, caractérisée en ce qu'elle est équipée d'un organe de ventilation disposé dans un logement (19) ménagé dans une paroi de ladite enceinte (17) et convenablement centré dans ce logement, par exemple un moto-ventilateur électrique (18), cet organe de ventilation pouvant également être placé dans un circuit de ventilation où l'enceinte (1) et la batterie (2) sont insérés.

## Patentansprüche

1. Wärmedämmkasten für Fahrzeugbatterie (2), der derart angeordnet ist, um wenigstens um die vertikalen Seiten der Batterie (2) Luftlamellen (L1, L2, L3, L4) zu begrenzen, die untereinander in Verbindung stehen, dadurch gekennzeichnet, daß er einen Behälter (1, 17) aus relativ nachgiebigem Material aufweist, der aus einem einzigen Stück geformt ist, in dem die Batterie (2) mit einer Deformierung der seitlichen Bereiche (3, 7) des Behälters eingebettet werden kann, und daß die nachgiebigen Einrichtungen (3, 5), welche sich auf den Umfang der Batterie (2) stützen im oberen Bereich des Kastens angeordnet sind, um in dichtender Weise die Luftlamellen bezüglich der Umgebung zu isolieren.

2. Kasten nach Anspruch 1, dadurch gekennzeichnet, daß sein Boden (1a) mit Stützelementen der Batterie (2) versehen ist, die unter ihr eine Luftlamelle (L5) begrenzen, die mit dem Umfang der Batterie beispielsweise mit Klötzen (6), die durch Deformierungen gebildet sind, in Verbindung stehen.

3. Kasten nach Anspruch 1 oder 2, dadurch gekennzeichnet, daß die dichten Isolierungseinrichtungen der vertikalen Luftlamellen durch eine Lippe (3) gebildet sind, die den oberen Rand des Kastens (1) bildet oder durch eine Dichtung (5) gebildet sind, die am oberen Rand des Kastens angeordnet ist.

4. Kasten nach einem der Ansprüche 1 bis 3, dadurch gekennzeichnet, daß er mit Klemm- und Haltemitteln der Batterie versehen ist, beispielsweise mit seitlichen Ausbuchtungen (7), die in das Innere gerichtet sind, die geeignet sind, sich beim Einsetzen der Batterie (2) zu deformieren, und sich in seitlichen komplementären Ausnehmungen (8) einbetten, die in den Seitenwänden der Batterie (2) ausgebildet sind.

5. Kasten nach einem der Ansprüche 1 bis 4, dadurch gekennzeichnet, daß wenigstens eine Lufteintrittsöffnung (13) und wenigstens eine Luftaustrittsöffnung (14) für die Lüftung des Kastens (1) in wenigstens einer Seitenwand und/oder dessen Boden (1a) angeordnet sind.

6. Kasten nach einem der Ansprüche 1 bis 5, dadurch gekennzeichnet, daß Ausnehmungen (15) in seinem oberen Bereich angeordnet sind, um die Handhabung des Kastens (1) zu erleichtern.

7. Kasten nach einem der Ansprüche 1 bis 6, dadurch gekennzeichnet, daß er mit einem Lüftungsorgan versehen ist, das in einer Aufnahme (19) angeordnet ist, die in einer Seitenwand des Kastens (17) ausgebildet ist, und ausreichend in dieser Aufnahme zentriert ist, beispielsweise einem elektrischen Motorventilator (18), wobei das Lüftungsorgan ebenfalls in einem Lüftungskreis angeordnet sein kann wo der Kasten (1) und die Batterie (2) eingesetzt sind.

**Claims**

1. Thermal insulation container for a vehicle battery (2) arranged so as to define, at least around the vertical sides of the battery (2), air spaces (L1, L2, L3, L4) communicating with one another, characterised in that it comprises a tank (1, 17) of relatively flexible material moulded in one piece, into which the battery (2) can be fitted with deformation of lateral parts (3, 7) of the tank, and in that flexible means (3, 5) fitting against the periphery of the battery (2) are provided in the upper part of the enclosure in order to form a leaktight insulation between these air spaces and the ambient air.

2. Enclosure according to claim 1, characterised in that its base (1a) is provided with support elements for the battery (2) defining below said battery an air space (L5) communicating with the periphery of the battery, said support elements being for example studs (6) formed by deformation.

3. Enclosure according to one of claims 1 and 2, characterised in that the means for providing in leaktight insulation of the vertical air spaces consist of a lip (3) forming the upper edge of the enclosure (1) or a joint (5) connected to the upper edge of the enclosure.

4. Enclosure according to one of claims 1 to 3, characterised in that it is provided with means for clamping and holding the battery, for example lateral bosses (7) directed inwardly and capable of being deformed when the battery (2) is put into position, these lateral bosses fitting into complementary lateral recesses (8) provided in the walls of the battery (2).

5. Enclosure according to one of claims 1 to 4, characterised in that at least one air intake orifice (13) and at least one air outlet orifice (14) for ventilating the enclosure (1) are provided in at least one of the walls and/or the base (1a) of said enclosure.

6. Enclosure according to one of claims 1 to 5, characterised in that indentations (15) are formed in the upper part thereof to facilitate handling of the enclosure (1).

7. Enclosure according to one of claims 1 to 6, characterised in that it is fitted with a ventilating member provided in a recess (19) formed in a wall of said enclosure (17) and expediently centred in this recess, for example an electric motor fan (18), whilst this ventilating member may also be placed in a ventilating circuit into which the enclosure (1) and the battery (2) are inserted.

EP 0 238 383 B1

FIG.3

FIG.2

FIG.1

FIG.4

FIG.5

FIG.6

EP 0 238 383 B1